(19) Europäisches Patentamt
European Patent Office
Office européen des brevets

(11) **EP 4 443 387 B1**

(12) **EUROPEAN PATENT SPECIFICATION**

(45) Date of publication and mention
of the grant of the patent:
**03.06.2026 Bulletin 2026/23**

(21) Application number: **24167175.9**

(22) Date of filing: **28.03.2024**

(51) International Patent Classification (IPC):
***G06T 7/20*** *(2017.01)*

(52) Cooperative Patent Classification (CPC):
**G06T 7/20; H04N 5/144**

(54) **PROCESSING DEVICE, SYSTEM, PROCESSING METHOD, AND APPARATUS**

VERARBEITUNGSVORRICHTUNG, SYSTEM, VERARBEITUNGSVERFAHREN UND VORRICHTUNG

DISPOSITIF, SYSTÈME, PROCÉDÉ ET APPAREIL DE TRAITEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.04.2023 JP 2023060319**

(43) Date of publication of application:
**09.10.2024 Bulletin 2024/41**

(73) Proprietor: **CANON KABUSHIKI KAISHA
Tokyo 146-8501 (JP)**

(72) Inventors:
• **KAWAGUCHI, Osamu**
**Tokyo (JP)**
• **ASHIDA, Jumpei**
**Tokyo (JP)**

(74) Representative: **WESER & Kollegen
Patentanwälte PartmbB
Radeckestraße 43
81245 München (DE)**

(56) References cited:
WO-A1-2022/107647    CN-A- 109 922 372
US-A1- 2006 088 100    US-A1- 2011 110 432
US-A1- 2018 098 082    US-A1- 2021 216 133

• WEIHUA HE ET AL: "TimeReplayer: Unlocking the Potential of Event Cameras for Video Interpolation", ARXIV.ORG, CORNELL UNIVERSITY LIBRARY, 201 OLIN LIBRARY CORNELL UNIVERSITY ITHACA, NY 14853, 25 March 2022 (2022-03-25), XP091184960
• WU SONG ET AL: "Video Interpolation by Event-Driven Anisotropic Adjustment of Optical Flow", LECTURE NOTES IN COMPUTER SCIENCE, vol. 13667, 13 November 2022 (2022-11-13), Springer, Cham, pages 267 - 283, XP047639766, DOI: https://doi.org/10.1007/978-3-031-20071-7_16
• YU ZHIYANG ET AL: "Training Weakly Supervised Video Frame Interpolation with Events", 2021 IEEE/CVF INTERNATIONAL CONFERENCE ON COMPUTER VISION (ICCV), IEEE, 10 October 2021 (2021-10-10), pages 14569 - 14578, XP034092750, DOI: 10.1109/ ICCV48922.2021.01432

**Description**

BACKGROUND OF THE INVENTION

Field of the Invention

The present invention relates to a processing device, a system, a processing method, and an apparatus.

Description of the Related Art

There are technologies called cross reality (hereinafter referred to as XR) for combining virtually-generated contents with real world. XR is a general term for virtual reality (hereinafter referred to as VR), augmented reality (hereinafter referred to as AR), mixed reality (hereinafter referred to as MR), substitutional reality (hereinafter referred to as SR), etc., and refers to technologies for combining virtually-generated contents or environment with actual sense or space.

Examples of devices in which XR is used include head-mounted displays (HMDs). HMDs include HMDs in which an optical see-through method is used and HMDs in which a video see-through method is used. The optical see-through method is a method of superposing images displayed on an electronic display on a view visible through a lens with use of an optical system such as a prism or a half mirror. On the other hand, the video see-through method is a method of augmenting the real world by capturing an image of a view in real time with use of a camera installed at the front of an HMD to generate a digital image and compositing the digital image of the view and virtually-generated digital contents.

The video see-through method has a merit in that digital data of an image of a view and digital contents are composited, and therefore, the real world and the digital information are merged at a high level. However, the video see-through method has demerits in that a phenomenon such as VR sickness or visually-induced motion sickness is likely to occur and there arises a difficulty in motion such as catching a moving object with a hand. This is because, in the video see-through method, there is a delay corresponding to the time it takes to perform processing for compositing an image of a view and digital contents between the time when the image of the view is captured and the time when the composited image is displayed. When the video see-through method is used, it is important to display an image of a view that matches the line of sight of a person wearing the HMD on a display without delay.

Japanese Patent Application Publication No. 2014-36357 discloses a technology for suppressing a delay in processing by calculating a motion vector between two frames based on the two frames, and generating a predictive frame from the calculated motion vector.

In the technology disclosed in Japanese Patent Application Publication No. 2014-36357, the motion vector cannot be calculated until the two frames are obtained. Also, the motion vector is calculated at a frequency that is the same as the frame rate. Accordingly, it is not possible to take detailed motion of the object between the two frames into consideration, and predict a future frame with high accuracy. If image capturing is performed at a high frame rate, a difference between time points at which two frames are respectively obtained becomes small and it becomes possible to take detailed motion of the object into consideration, but the processing is to be performed at a high processing speed. Also, the required processing speed cannot be realized when the processing is performed only in a device such as an HMD, and the device cannot be used as a standalone device. Furthermore, a frame is commonly constituted by a large amount of data, and therefore, if image capturing is performed at a high frame rate, communication traffic from an image capturing element (image sensor) such as a CMOS that performs image capturing to a processing device that processes frames increases.

US 2018/0098082 A1 relates to techniques for motion estimation using hybrid video imaging based on frame-based capture and event-based capture. H. Weihua et al., arxiv.org, arXiv:2203.13859v1 (2022), relates to event cameras for video interpolation. W. Song et al., Lecture Notes in Computer Science (2022), pages 267-283, relates to video interpolation by event-driven anisotropic adjustment of optical flow. Y. Zhiyang et al., 2021 IEEE/CVF International Conference on Computer Vision (2021), pages 14569-14578, relates to the training of weakly supervised video frame interpolation with events.

SUMMARY OF THE INVENTION

The invention is defined by the appended set of claims.

Further features of the present invention will become apparent from the following description of exemplary embodiments with reference to the attached drawings.

BRIEF DESCRIPTION OF THE DRAWINGS

FIG. 1 is a diagram showing a configuration example of an image capturing device according to Embodiment 1;
FIG. 2 is a diagram showing a configuration example of an event data obtaining unit according to Embodiment 1;
FIG. 3 is a diagram showing a configuration example of a pixel in the event data obtaining unit according to Embodiment 1;
FIG. 4 is a diagram showing a configuration example of a processing unit according to Embodiment 1;
FIG. 5 is a diagram schematically showing processing performed by the processing unit according to Embodiment 1;
FIG. 6 is a diagram showing a configuration example of a processing unit according to Embodiment 2;
FIG. 7 is a diagram schematically showing processing performed by the processing unit according to Embodiment 2;
FIG. 8 is a diagram showing a configuration example of a vision system according to Embodiment 3; and
FIG. 9 is a diagram showing a configuration example of an apparatus according to Embodiment 4.

DESCRIPTION OF THE EMBODIMENTS

The following describes embodiments of the present invention with reference to the drawings. Note that the embodiments described below can be combined suitably as long as no contradiction arises. Further note that Embodiment 1 is a reference embodiment outside of the scope of the present invention as claimed.

Embodiment 1

Description of Entire Image Capturing Device

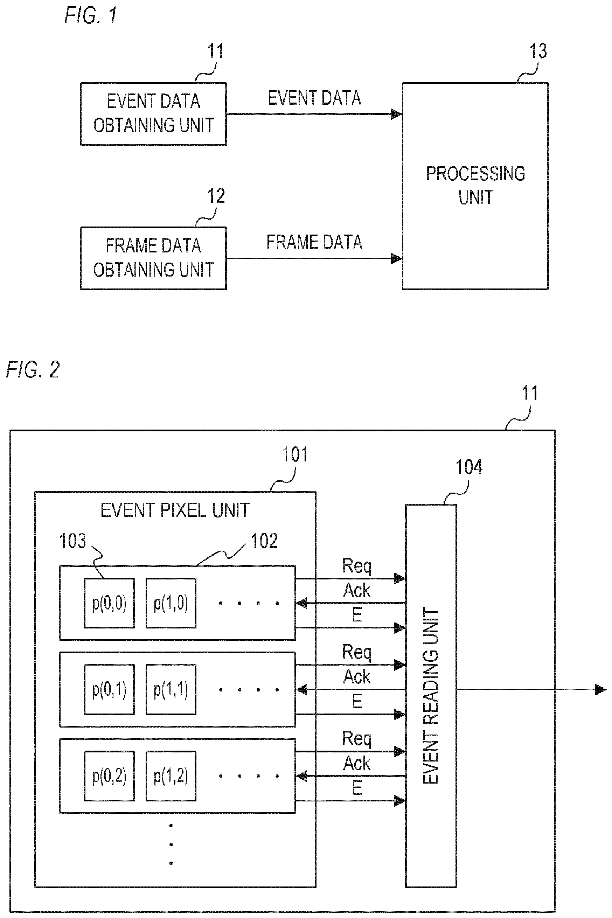

The following describes a configuration of an image capturing device according to Embodiment 1 with reference to FIG. 1. The image capturing device according to Embodiment 1 includes an event data obtaining unit 11, a frame data obtaining unit 12, and a processing unit 13.

The event data obtaining unit 11 is a circuit that detects changes in pixel values of an object and thus obtains event data that is a detection result of a change in the pixel values. The frame data obtaining unit 12 is a circuit that captures images of the object and thus obtains frame data of images of the object. The processing unit 13 (processor) receives event data from the event data obtaining unit 11 and detects motion of the object with use of the event data, and thus obtains motion information that is a detection result of motion of the object. Furthermore, the processing unit 13 generates predictive frame data corresponding to a time later than a time to which frame data output from the frame data obtaining unit 12 corresponds, based on the generated motion information and the frame data output from the frame data obtaining unit 12.

The frame data obtaining unit 12 performs image capturing for obtaining frame data at a predetermined interval (hereinafter referred to as a "frame period"). The event data obtaining unit 11 is capable of detecting changes in the pixel values at an interval shorter than the frame period and obtaining event data at an interval shorter than the frame period. Accordingly, the processing unit 13 is capable of detecting motion of the object at an interval shorter than the frame period by using event data, and capable of obtaining motion information at an interval shorter than the frame period. The processing unit 13 can predict a future frame with high accuracy by using motion information obtained by detecting motion of the object at an interval shorter than the frame period, i.e., at a high time resolution. Specifically, the processing unit 13 can generate predictive frame data in which detailed motion of the object between frames is reflected.

Each of a plurality of images that constitute a video (which may be interpreted as moving image) is a frame. A period from when a frame synchronization signal becomes active to when the frame synchronization signal becomes active again is the period of a single frame, and a single image generated in this period of a single frame is the single frame. An image capturing element (image sensor) commonly includes a plurality of pixels arranged in a two-dimensional array (which may be interpreted as a matrix) and a vertical scanning circuit that scans each row of the plurality of pixels. The frame synchronization signal is a signal for controlling timings at which the vertical scanning circuit starts to operate. When focusing on a pixel row, a period from when signals of the pixel row are read to when signals of the pixel row are read again is the period of a single frame, and a single image generated in this period is the single frame. Frame data is image data of frames.

Description of Event Data Obtaining Unit

The following describes a circuit configuration of the event data obtaining unit 11 according to Embodiment 1 with reference to FIG. 2. The event data obtaining unit 11 obtains event data by performing a predetermined arithmetic operation on signals detected by pixels. The event data obtaining unit 11 includes an event pixel unit 101 and an event reading unit 104.

Similarly to common image capturing elements, the event pixel unit 101 includes a plurality of pixels P(m, n) 103 arranged in a two-dimensional array. m is an integer satisfying $0 \leq m \leq (M-1)$, n is an integer satisfying $0 \leq n \leq (N-1)$, and $M \times N$ is the number of pixels included in the event data obtaining unit 11. Note that there is no particular limitation on the arrangement of pixels 103, and it is possible to adopt a one-dimensional line sensor arrangement or any other arrangement.

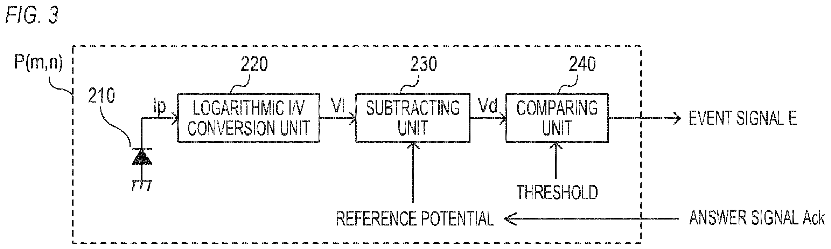

Each of the plurality of pixels 103 is capable of detecting a change in the quantity of incident light as an event and outputting an event signal E that is a detection result of the change, and is constituted by a circuit shown in FIG. 3, for example. A photodiode 210 generates a photoelectric current Ip corresponding to the quantity of incident light. A logarithmic I/V conversion unit 220 obtains a logarithmic potential Vl by converting the photoelectric current Ip to a potential while performing logarithmic conversion. A subtracting unit 230 calculates a difference Vd between the logarithmic potential Vl and a reference potential. A comparing unit 240 compares the difference Vd with predetermined thresholds. The thresholds include a positive threshold T1 and a negative threshold T2, and if the difference Vd is larger than the positive threshold T1 or smaller than the negative threshold T2, the difference is detected as an event. An event signal E(x, y, t) of a pixel P(x, y) at a time t can be expressed by the following formula.

[Math. 1]

$$E(x, y, t) = \begin{cases} 1 \ (when \ Vd > T1) \\ -1 \ (when \ Vd < T2) \\ 0 \ (otherwise) \end{cases}$$

The resolution of the time t is 1 $\mu$s, for example. An event signal E=1 indicates the occurrence of a change in the quantity of incident light that makes the incident light brighter, i.e., the occurrence of a positive event, and an event signal E=-1 indicates the occurrence of a change in the quantity of incident light that makes the incident light darker, i.e., the occurrence of a negative event. The formula shown above is an example expression of the event signal E, and it is possible to adopt various expressions. For example, different numerical values may be respectively assigned to the positive event, the negative event, and a state where no event has occurred. Alternatively, it is also possible to handle event signals indicating the positive event and the negative event as event signals of the same type, without distinguishing between the positive event and the negative event. Events occur at a high time resolution irrespective of (not synchronously with) frame synchronization signals that are used in common image capturing elements. The event signal E is transmitted to the event reading unit 104. The logarithmic potential Vl when an event occurred is used as the next reference potential. The reference potential is updated in response to an answer signal Ack being received from the event reading unit 104.

With respect to each pixel row 102 that is a row of a plurality of pixels 103, the event pixel unit 101 outputs a transmission request signal Req for requesting the event reading unit 104 to transmit event signals E. The transmission request signal Req from each pixel row 102 is output when at least one pixel 103 included in the pixel row 102 has detected an event, i.e., when the event signal E is 1 or -1, for example. Although a case where the event pixel unit 101 outputs the transmission request signal Req with respect to each pixel row 102 has been described, the event pixel unit 101 may also output the transmission request signal Req with respect to each column constituted by a plurality of pixels 103. Alternatively, the event pixel unit 101 may output the transmission request signal Req with respect to another region (pixel group). For example, the transmission request signal Req may also be output with respect to each rectangular region including a predetermined number of columns and a predetermined number of rows.

The event reading unit 104 includes a mediating unit that mediates between transmission request signals Req respectively output from pixel rows 102 of the event pixel unit 101, and reads out the event signal E of each pixel 103 included in a selected pixel row 102. Once the event signals E held by the pixels 103 are read by the event reading unit 104, the event signals E are cleared to 0. Thereafter, an answer signal Ack is transmitted from the event reading unit 104 to the pixel row 102 from which the event signals E have been read, and each pixel 103 included in the pixel row 102 resumes event detection by using a logarithmic potential Vl at the time when the answer signal Ack is received, as a new reference potential.

Each event signal E read by the event reading unit 104 is used as data (event data) that is finally output from the event data obtaining unit 11. For example, the event reading unit 104 outputs event data that includes the polarity of the event (whether the event is a positive event or a negative event), coordinate values corresponding to the event, and time stamp of a point in time at which the event signal E was read. The coordinate values and the time stamp can be obtained by the event reading unit 104. The event reading unit 104 obtains the position of a pixel 103, from which the event signal E was read, in the row direction and the column direction as coordinate values corresponding to the event. Also, the event reading unit 104 includes a timer circuit (not shown), for example, and obtains an output value of the timer at the point in time at which the event signal E was read, as the time stamp.

Note that the event data obtaining unit 11 may be a single-layer sensor or a stacked sensor. In the case where the event data obtaining unit 11 is a stacked sensor, a boundary (Cu-Cu joint) between a first layer and a second layer may be provided in the logarithmic I/V conversion unit 220.

Description of Frame Data Obtaining Unit

The following describes a configuration of the frame data obtaining unit 12. The frame data obtaining unit 12 is constituted by an image capturing element such as a CMOS, reads electric charges accumulated in photodiodes, performs A/D conversion, and thus obtains frame data.

Description of Processing Unit

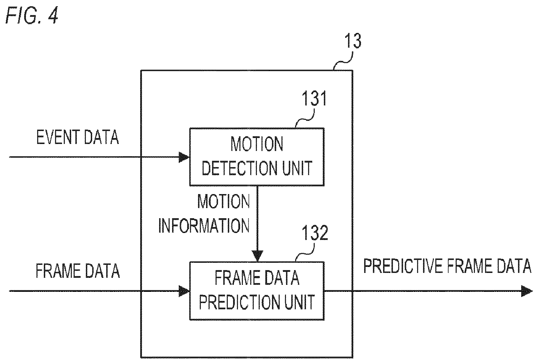

The following describes a configuration of the processing unit 13 according to Embodiment 1 with reference to FIG. 4. The processing unit 13 includes a motion detection unit 131 and a frame data prediction unit 132.

The motion detection unit 131 obtains motion information that is a detection result of motion of the object by using event data output from the event data obtaining unit 11. The motion information indicates the type and amount of motion of the object, for example. Examples of the type of motion include translation in an x direction, translation in a y direction, yawing, pitching, rolling, zooming, etc., and examples of the amount of motion include the speed and acceleration of the motion.

The frame data prediction unit 132 generates predictive frame data from motion information output from the motion detection unit 131 and frame data output from the frame data obtaining unit 12.

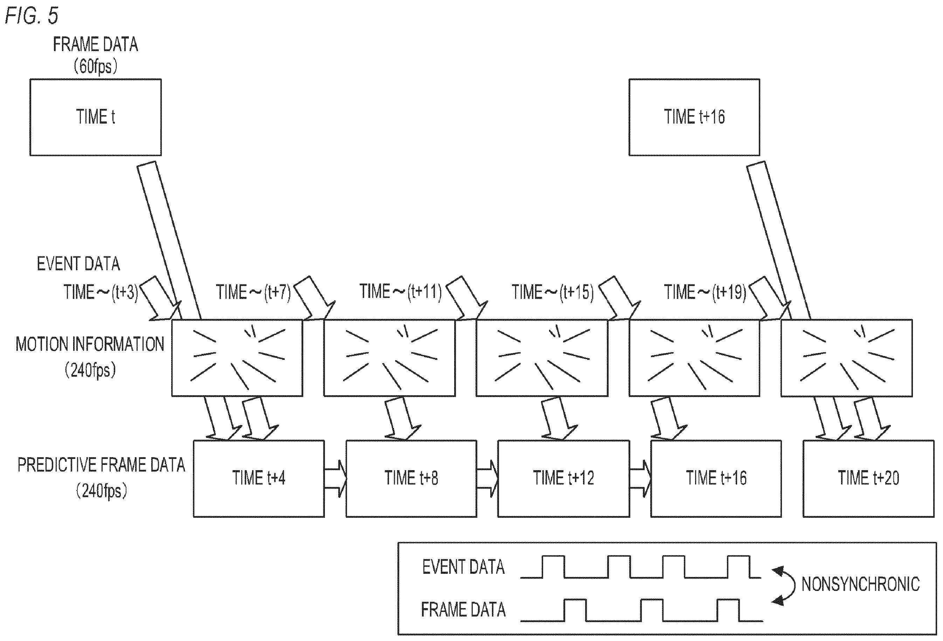

The following describes processing performed by the processing unit 13 with reference to FIG. 5. In FIG. 5, the rightward direction indicates the passage of time. In this example, frame data is output from the frame data obtaining unit 12 at an interval of 60 fps, i.e., about 16.67 msec, but there is no limitation on the rate (frame rate) and the interval (frame period) at which the frame data obtaining unit 12 outputs frame data.

The motion detection unit 131 calculates optical flow by using event data that is output from the event data obtaining unit 11 non-synchronously with frame data output from the frame data obtaining unit 12. The optical flow is vector information representing motion for each pixel or region, and is calculated based on a change in the position at which an event has occurred in a predetermined region in a predetermined period of time, for example. Furthermore, the motion detection unit 131 calculates the type and amount of motion from the optical flow. Known algorithms can be used as a method for calculating the optical flow from event data and a method for calculating the type and amount of motion from the optical flow. Note that there is no particular limitation on the method for calculating (obtaining) the type and amount of motion from event data. For example, it is possible to calculate the type and amount of motion directly from event data without the optical flow being calculated. Any method may be used as the method for calculating the type and amount of motion from event data. In this example, the frame data obtaining unit 12 outputs frame data at a time t. Then, the motion detection unit 131 obtains the type and amount of motion by using event data that is output from the event data obtaining unit 11 at a time t+3 later than the time t, and generates motion information indicating the type and amount of motion. Specifically, the motion detection unit 131 obtains the type and amount of motion by using event data that is output from the event data obtaining unit 11 during a period from the time t to the time t+3, and generates motion information indicating the type and amount of motion. The motion detection unit 131 outputs the generated motion information to the frame data prediction unit 132. Note that optical flow may be used as the motion information.

The frame data prediction unit 132 generates predictive frame data by using the motion information output from the motion detection unit 131 and frame data output from the frame data obtaining unit 12. In this example, the frame data prediction unit 132 generates frame data of a time t+4 as the predictive frame data by using the motion information generated from event data during the period from the time t to the time t+3 and the frame data of the time t. At this point in time, the frame data of the time t+4 is frame data of the future for which image capturing has not been performed.

The motion information output from the motion detection unit 131 indicates motion during the period from the time t to the time t+3, and accordingly, the frame data prediction unit 132 predicts motion during a period to the time t+4 when generating (predicting) the frame data of the time t+4. For example, the frame data prediction unit 132 generates (predicts) motion information indicating motion during a period from the time t to the time t+4 from the motion information indicating motion during the period from the time t to the time t+3. There is no particular limitation on the method for predicting motion information. For example, it is possible to generate, as the motion information indicating motion during the period from the time t to the time t+4, motion information indicating motion that is obtained by multiplying the motion from the time t to the time t+3 by 4/3 with use of the ratio of time (ratio between the lengths of the periods). Then, the frame data prediction unit 132 generates predictive frame data of the time t+4 by using the motion information indicating motion during the period from the time t to the time t+4 and the frame data of the time t.

Note that a known algorithm can be used as a method for predicting frame data of the future from frame data and motion information. Any method may be used as the method for predicting frame data of the future from frame data and motion information. It is also possible to add processing such as filtering processing performed on a boundary between a pixel in which there was motion and a pixel in which there was no motion in order to suppress an artifact at the boundary between those pixels.

Thereafter, the motion detection unit 131 generates motion information from event data during a period from the time t+4 to a time t+7 in a similar manner. Then, the frame data prediction unit 132 generates predictive frame data of a time t+8 by using the motion information generated from event data during the period from the time t+4 to the time t+7 and the predictive frame data of the time t+4. Such processing is repeated until the frame data obtaining unit 12 outputs frame data next to the frame data of the time t. In this example, the frame data obtaining unit 12 outputs frame data next to the frame data of the time t, at a time t+16.

The following describes processing performed by the processing unit 13 when the frame data obtaining unit 12 has output frame data of the time t+16, i.e., the frame data next to the frame data of the time t. The motion detection unit 131 generates motion information from event data during a period from the time t+16 to a time t+19 and outputs the generated motion information to the frame data prediction unit 132. The frame data prediction unit 132 generates predictive frame data of a time t+20 by using the motion information generated from event data during the period from the time t+16 to a time t+19 and the frame data output from the frame data obtaining unit 12 at the time t+16.

As described above, according to Embodiment 1, it is possible to detect motion of the object at an interval shorter than the frame period by using event data. Also, it is possible to predict a future frame with high accuracy by using motion of the object detected at the interval shorter than the frame period, i.e., detected at a high time resolution.

Although an example in which the event data obtaining unit 11 and the frame data obtaining unit 12 are used as two sensors has been described, it is also possible to use a single hybrid sensor that is capable of obtaining both event data and frame data.

Also, an example in which an image processing device that generates predictive frame data is an image capturing device has been described, but the image processing device that generates predictive frame data need not be an image capturing device. For example, a configuration is also possible in which an image processing device separate from an image capturing device obtains event data and frame data from the image capturing device, detects motion of the object by using the event data, and generates predictive frame data from the frame data and motion of the object.

Embodiment 2

In the example described in Embodiment 1, frame data of the future is predicted with use of frame data and motion information generated from event data. In Embodiment 2, an example will be described in which intermediate frame data is generated from predictive frame data generated with use of the method described in Embodiment 1 and frame data that is obtained through image capturing (hereinafter referred to as "captured frame data"), in order to suppress an artifact that occurs when prediction was wrong. Examples of an artifact that occurs when prediction was wrong include distortion of the shape of an object in an image and a difference of motion of an object in an image from actual motion. Although the intermediate frame data is one type of predictive frame data, hereinafter, only predictive frame data generated with use of the method described in Embodiment 1 will be referred to as "predictive frame data" to distinguish between predictive frame data generated with use of the method described in Embodiment 1 and the intermediate frame data.

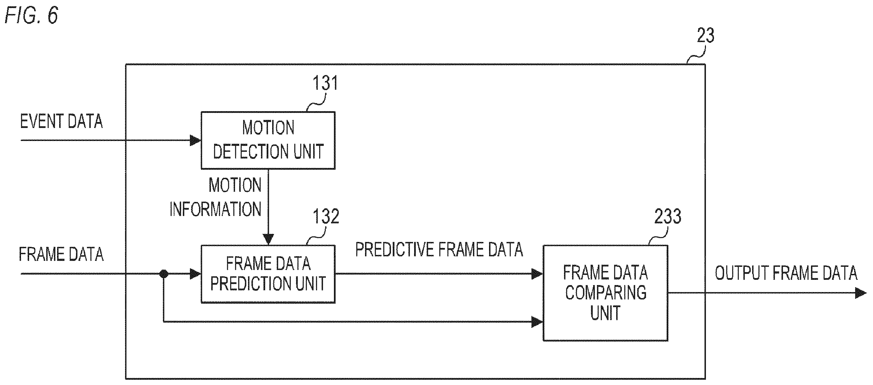

In Embodiment 2, the processing unit 13 shown in FIG. 4 is not used, and a processing unit 23 shown in FIG. 6 is used. The processing unit 23 includes a motion detection unit 131, a frame data prediction unit 132, and a frame data comparing unit 233. Processing performed by the motion detection unit 131 and the frame data prediction unit 132 of the processing unit 23 is the same as that described in Embodiment 1, and therefore, descriptions thereof are omitted.

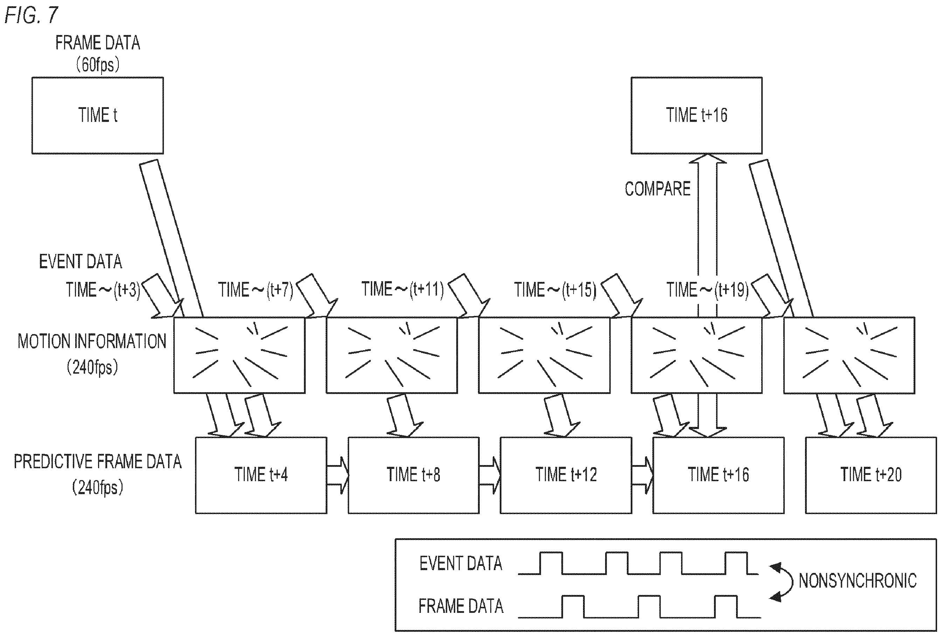

The following describes operations of the frame data comparing unit 233 with reference to FIG. 7. The frame data comparing unit 233 compares captured frame data that is output from the frame data obtaining unit 12 and predictive frame data that is output from the frame data prediction unit 132, and determines whether or not a difference between the captured frame data and the predictive frame data is larger than a threshold.

For example, the frame data comparing unit 233 compares captured frame data and predictive frame data corresponding to a time that is the closest to a time corresponding to the captured frame data. In this example, the frame data comparing unit 233 compares captured frame data and predictive frame data that correspond to the same time. Specifically, the frame data comparing unit 233 compares captured frame data of the time t+16 and predictive frame data of the time t+16. In this comparison, the frame data comparing unit 233 calculates a difference between a value included in the captured frame data and a value included in the predictive frame data with respect to each pixel, and calculates an integrated value of differences calculated for all pixels, as a difference between the captured frame data and the predictive frame data.

When the integrated value is larger than the threshold, prediction of the frame data was wrong. When an integrated value that is a difference between the captured frame data of the time t+16 and the predictive frame data of the time t+16 is larger than the threshold, an image corresponding to the predictive frame data of the time t+16 does not smoothly transition to an image corresponding to predictive frame data of the time t+20. Therefore, when the integrated value is larger than the threshold, the frame data comparing unit 233 generates intermediate frame data and outputs the intermediate frame data. When the integrated value that is a difference between the captured frame data of the time t+16 and the predictive frame data of the time t+16 is larger than the threshold, intermediate frame data of the time t+16 is generated from the captured frame data of the time t+16 and the predictive frame data of the time t+16. When the integrated value is equal to or smaller than the threshold, the frame data comparing unit 233 outputs the predictive frame data generated by the frame data prediction unit 132. When the integrated value that is a difference between the captured frame data of the time t+16 and the predictive frame data of the time t+16 is equal to or smaller than the threshold, the predictive frame data of the time t+16 is output.

For example, the frame data comparing unit 233 generates, as intermediate frame data, frame data that has a value (e.g., an average value) between the value included in the captured frame data and the value included in the predictive frame data with respect to each pixel. The intermediate frame data may have a value between the value included in the captured frame data and the value included in the predictive frame data with respect to the whole region of the object (which may be read as an image), but this configuration does not need to be adopted. For example, a configuration is also possible in which, among pieces of data constituting the intermediate frame data, only a piece of data that corresponds to a part of a region of the object (e.g., a region in which there is a large difference between the captured frame data and the predictive frame data) has a value between the value included in the captured frame data and the value included in the predictive frame data. In this case, among the pieces of data constituting the intermediate frame data, each piece of data corresponding to the remaining region of the object may have the same value as the value included in the captured frame data or the value included in the predictive frame data. Among pieces of data constituting the captured frame data, a piece of data that is used to obtain a piece of data corresponding to a part (hereinafter referred to as a "partial region") of a region of the object in the intermediate frame data may correspond to a region that is at the same location as the partial region, but this configuration does not need to be adopted. Likewise, among pieces of data constituting the predictive frame data, a piece of data that is used to obtain the piece of data corresponding to the partial region in the intermediate frame data may correspond to a region that is at the same location as the partial region, but this configuration does not need to be adopted. The piece of data corresponding to the partial region in the intermediate frame data may be obtained with use of a piece of data included in the captured frame data and a piece of data included in the predictive frame data, which pieces of data respectively correspond to regions that are at different locations.

In a case where the intermediate frame data is displayed, a delay corresponding to the time it takes to perform the processing for generating the intermediate frame data occurs in displaying the frame data, when compared with a case where predictive frame data is displayed. However, such a delay is short enough to be negligible and is not an issue.

The processing performed by the frame data comparing unit 233 may be performed with respect to all captured frame data output from the frame data obtaining unit 12 or may be performed only with respect to some of the captured frame data. For example, the processing may be performed at a frequency of once every several frames. Whether or not to perform the processing may be switched depending on the complexity of captured frame data. There is no particular limitation on the method for calculating the complexity of captured frame data. For example, the complexity of captured frame data can be calculated based on an integrated value of differences between an average pixel value of the captured frame data and each pixel value. The complexity of captured frame data can also be calculated based on the complexity of motion detected from event data.

As described above, according to Embodiment 2, when prediction of frame data was wrong, intermediate frame data is generated, and therefore, it is possible to realize smooth transition of images even in such a case.

Embodiment 3

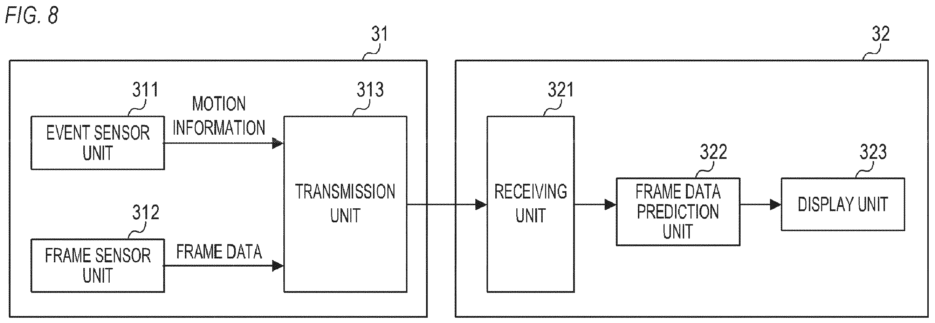

In Embodiment 3, an example of a system in which an image capturing device and a display device are used will be described. The following describes a configuration of a vision system according to Embodiment 3 with reference to FIG. 8. The vision system according to Embodiment 3 includes an image capturing device 31 and a display device 32.

The image capturing device 31 includes an event sensor unit 311, a frame sensor unit 312, and a transmission unit 313. The event sensor unit 311 has the functions of the event data obtaining unit 11 and the motion detection unit 131 in Embodiment 1. Processing performed by the frame sensor unit 312 is the same as the processing performed by the frame data obtaining unit 12 in Embodiment 1. The transmission unit 313 (transmission (communication) interface) receives motion information output from the event sensor unit 311 and frame data output from the frame sensor unit 312, and transmits the motion information and the frame data to the outside of the image capturing device 31.

The display device 32 includes a receiving unit 321, a frame data prediction unit 322, and a display unit 323. The receiving unit 321 (reception (communication) interface) receives the frame data and the motion information output from the transmission unit 313 of the image capturing device 31, from the outside of the display device 32, and outputs the received frame data and motion information to the frame data prediction unit 322. Processing performed by the frame data prediction unit 322 is the same as the processing performed by the frame data prediction unit 132 in Embodiment 1. The frame data prediction unit 322 generates predictive frame data by using the motion information and the frame data output from the receiving unit 321 and outputs the generated predictive frame data to the display unit 323. The display unit 323 displays an image based on the predictive frame data output from the frame data prediction unit 322.

As described above, according to Embodiment 3, it is possible to predict future frames with high accuracy similarly to Embodiment 1. Furthermore, the image capturing device 31 transmits motion information and frame data, and the display device 32 generates predictive frame data by using the motion information and the frame data. With this configuration, it is possible to reduce communication traffic between the image capturing device 31 and the display device 32 when compared with a case where predictive frame data is sequentially transmitted from the image capturing device 31 to the display device 32.

Although an example in which the image capturing device 31 generates motion information has been described, the device that generates the motion information does not need to be the image capturing device 31. For example, a configuration is also possible in which event data is transmitted from the image capturing device 31 to the display device 32, and motion information is generated from the event data by the display device 32. With this configuration as well, it is possible to reduce communication traffic between the image capturing device 31 and the display device 32 when compared with a case where predictive frame data is sequentially transmitted from the image capturing device 31 to the display device 32.

Embodiment 4

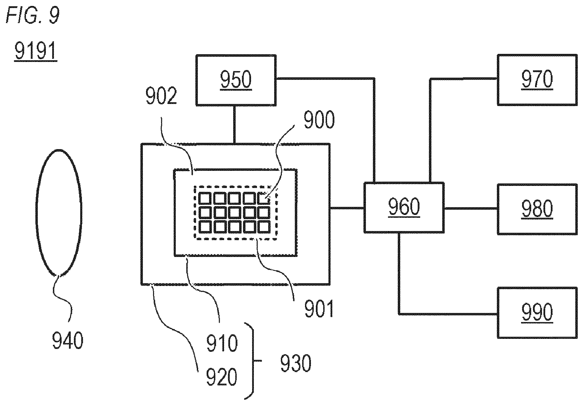

Both Embodiments 1 and 2 can be applied to Embodiment 4. FIG. 9 is a schematic diagram showing an apparatus 9191 including a semiconductor device 930 according to the present embodiment. The semiconductor device 930 can be constituted by either one of the image capturing devices (image processing devices) described in Embodiments 1 and 2 or an image capturing device (image processing device) obtained by combining a plurality of embodiments. The following describes the apparatus 9191 including the semiconductor device 930 in detail. The semiconductor device 930 may include a semiconductor device 910 including a semiconductor layer as described above, and a package 920 for housing the semiconductor device 910. The package 920 may include a substrate to which the semiconductor device 910 is fixed and a cover made of glass or the like and facing the semiconductor device 910. The package 920 may further include a joining member such as a bonding wire or a bump for connecting a terminal provided on the substrate and a terminal provided on the semiconductor device 910.

The apparatus 9191 may include at least any of an optical device 940, a control device 950, a processing device 960, a display device 970, a storage device 980, and a mechanical device 990. The optical device 940 corresponds to the semiconductor device 930. Examples of the optical device 940 include a lens, a shutter, and a mirror. The control device 950 controls the semiconductor device 930. The control device 950 is a semiconductor device such as an ASIC.

The processing device 960 processes signals output from the semiconductor device 930. The processing device 960 is a semiconductor device such as a CPU or an ASIC for constituting an AFE (Analog Front End) or a DFE (Digital Front End). The display device 970 is an EL display device or a liquid crystal display device that displays information (image) obtained by the semiconductor device 930. The storage device 980 is a magnetic device or a semiconductor device for storing information (image) obtained by the semiconductor device 930. The storage device 980 is a volatile memory such as SRAM or DRAM, or a non-volatile memory such as a flash memory or a hard disk drive.

The mechanical device 990 includes a movable unit or a driving unit such as a motor and an engine. In the apparatus 9191, signals output from the semiconductor device 930 are displayed in the display device 970 or transmitted to the outside via a communication device (not shown) included in the apparatus 9191. Therefore, in one embodiment, the apparatus 9191 further includes the storage device 980 and the processing device 960 in addition to a storage circuit and an arithmetic operation circuit included in the semiconductor device 930. The mechanical device 990 may be controlled based on signals output from the semiconductor device 930.

The apparatus 9191 is suitable for an electronic apparatus such as an information terminal (e.g., a smartphone or a wearable terminal) that has an image capturing function or a camera (e.g., a lens-replaceable camera, a compact camera, a video camera, or a monitoring camera). The mechanical device 990 included in a camera can drive components of the optical device 940 for zooming, focusing, and a shutter operation. Alternatively, the mechanical device 990 included in a camera can move the semiconductor device 930 for a vibration reducing operation.

The apparatus 9191 may also be a transportation apparatus such as a vehicle, a ship, or a flying object. The mechanical device 990 included in a transportation apparatus may be used as a travel device. The apparatus 9191 is suitable for a transportation apparatus that transports the semiconductor device 930 or in which an image capturing function is utilized to assist and/or automate driving (piloting). The processing device 960 used to assist and/or automate driving (piloting) can perform processing for operating the mechanical device 990, which serves as a travel device, based on information obtained by the semiconductor device 930. Alternatively, the apparatus 9191 may be a medical apparatus such as an endoscope, a measurement apparatus such as a distant measurement sensor, an analysis apparatus such as an electron microscope, an office apparatus such as a copying machine, or an industrial apparatus such as a robot.

According to Embodiment 4 described above, it is possible to obtain favorable pixel characteristics. Accordingly, it is possible to increase the value of the semiconductor device 930. Here, increasing the value means at least any of adding a function, improving performance, improving characteristics, improving reliability, increasing the production yield, reducing an environmental load, reducing cost, downsizing, and reducing the weight.

Accordingly, by using the semiconductor device 930 according to Embodiment 4 in the apparatus 9191, it is possible to increase the value of the apparatus as well. For example, when the semiconductor device 930 is installed in a transportation apparatus, it is possible to obtain excellent performance when capturing images of the outside of the transportation apparatus or measuring the external environment. Therefore, determining to install the semiconductor device 930 according to Embodiment 4 in a transportation apparatus when manufacturing or selling the transportation apparatus is beneficial in increasing the performance of the transportation apparatus itself. In particular, the semiconductor device 930 is suitable for a transportation apparatus in which driving of the transportation apparatus is assisted and/or automated with use of information obtained by the semiconductor device 930.

Each embodiment described above can be modified as appropriate within a scope not departing from the technical idea. Note that contents disclosed in the present specification include not only those described in the present specification but also all matters that can be grasped from the present specification and the drawings attached to the present specification. Also, the contents disclosed in the present specification encompass a complementary set of the concepts described in the present specification. For example, when the present specification includes a description "A is larger than B", it can be said that the present specification discloses "A is not larger than B" even when the description "A is not larger than B" is omitted. This is because the description "A is larger than B" is made with consideration given to the case where "A is not larger than B".

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A processing device (13) for outputting predictive frame data for a moving image of an object which is constituted by a plurality of frames that are arranged at a predetermined interval, comprising:

   first obtaining means (12) configured to obtain first frame data that is frame data of the moving image of the object that corresponds to a first point in time (t);
   second obtaining means (11) configured to obtain event data that is obtainable at an interval shorter than the predetermined interval and is a detection result of a change in a pixel value of the object;
   detection means (131) configured to detect motion of the object at an interval shorter than the predetermined interval by using the event data; and
   generation means (132) configured to generate predictive frame data from the first frame data and the motion of the object, the predictive frame data corresponding to a plurality of points in time (t+4, t+8, t+12, t+16) that are later than a first point in time (t) to which the first frame data corresponds; and
   third obtaining means (12) configured to obtain second frame data that is frame data of the moving image that corresponds to a second point in time (t+16) which is after the first point in time (t);
   **characterized by**
   second generation means (233) configured to generate, in a case where a difference between the second frame data and third frame data included in the predictive frame data generated by the generation means that corresponds to a third point in time (t+16) among the plurality of points in time which is closest to the second point in time (t+16) is larger than a threshold, intermediate frame data by using third data that has a pixel value between a value of a pixel included in the first data and a value of a pixel included in the second data with respect to each pixel included in the first data and the second data, respectively, the first data corresponding to at least part of a region of the object in the second frame data, and the second data corresponding to at least part of a region of the object in the third frame data;
   wherein the second generation means is adapted to calculate said difference between the second frame data and the third frame data based on values of pixels included in the second frame data and the third frame data, respectively; and
   wherein the second generation means is further adapted to output, as frame data of the predictive frame data corresponding to the third point in time,

   the third frame data in a case where said difference is smaller than or equal to the threshold, and
   the intermediate frame data in the case where said difference is larger than the threshold.

2. The processing device according to claim 1,

   wherein the first obtaining means captures the object at the predetermined interval, and
   the second obtaining means detects the change in the pixel value.

3. The processing device according to claim 1 or 2, wherein the generation means generates the predictive frame data based on the first frame data and the motion of the object detected by using the event data corresponding to the time later than the time to which the first frame data corresponds.

4. The processing device according to any one of claims 1 to 3,
wherein the pixel values of the third data are average values between the respective pixel values of the first data and the second data.

5. The processing device according to any one of claims 1 to 4, wherein
the first data correspond to a part of the region of the object in the second frame data, and the second data correspond to a part of the region of the object in the third frame data.

6. The processing device according to any one of claims 1 to 5, wherein the second point in time and the third point in time are the same.

7. The processing device according to any one of claims 1 to 6, wherein the second generation means is configured to perform the calculating and the generating at a frequency of once every several frames among the plurality of frames.

8. The processing device according to any one of claims 1 to 7, wherein the second generation means is adapted to calculate a difference between a value included in the second frame data and a value included in the third frame data with respect to each pixel included in the second frame data and the third frame data, respectively, and to calculate an integrated value of the differences calculated for all pixels as the difference between the second frame data and the third frame data.

9. An apparatus (9191) comprising the processing device according to any one of claims 1 to 8, and further comprising at least one of:

   an optical device (940) corresponding to the processing device;
   a control device (950) configured to control the processing device;
   a signal processing device (960) configured to process a signal output from the processing device;
   a display device (970) configured to display information obtained by the processing device;
   a storage device (980) configured to store information obtained by the processing device; and
   a mechanical device (990) configured to operate based on information obtained by the processing device.

10. A system comprising:

    a capturing device (31); and
    a display device (32),
    wherein the capturing device includes:

first obtaining means (312) configured to obtain frame data that is frame data of an image of an object by capturing the object at a predetermined interval;
second obtaining means (311) configured to obtain event data that is obtainable at an interval shorter than the predetermined interval and is a detection result of a change in a pixel value of the object by detecting the change in the pixel value of the object;
detection means configured to detect motion of the object at an interval shorter than the predetermined interval by using the event data; and
transmission means (313) configured to transmit the first frame data and motion information regarding the motion of the object to outside of the image capturing device, and

the display device includes:

receiving means (321) configured to receive the frame data and the motion information from outside of the display device;
the processing device (322) according to any one of claims 1 to 8, wherein the first obtaining means of the processing device is adapted to obtain the first frame data from the frame data received by the receiving means, the second obtaining means of the processing device is adapted to obtain the event data received by the receiving means, and the third obtaining means of the processing device is adapted to obtain the second frame data from the frame data received by the receiving means; and
display means (323) configured to display an image based on the frame data output by the processing device.

11. A processing method for outputting predictive frame data for a moving image of an object which is constituted by a plurality of frames that are arranged at a predetermined interval, comprising:

obtaining first frame data that is frame data of the moving image of the object that corresponds to a first point in time;
obtaining event data that is obtainable at an interval shorter than the predetermined interval and is a detection result of a change in a pixel value of the object;
detecting motion of the object at an interval shorter than the predetermined interval by using the event data; and
a generation step of generating predictive frame data from the first frame data and the motion of the object, the predictive frame data corresponding to a plurality of points in time that are later than a first point in time to which the first frame data corresponds; and

obtaining second frame data that is frame data of the moving image that corresponds to a second point in time which is after the first point in time;

**characterized by**

a second generation step of generating, in a case where a difference between the second frame data and third frame data included in the predictive frame data generated by the generation step that corresponds to a third point in time among the plurality of points in time which is closest to the second point in time is larger than a threshold, intermediate frame data by using third data that has a pixel value between a value of a pixel included in the first data and a value of a pixel included in the second data with respect to each pixel included in the first data and the second data, respectively, the first data corresponding to at least part of a region of the object in the second frame data, and the second data corresponding to at least part of a region of the object in the third frame data;

wherein the second generation means is adapted to calculate said difference between the second frame data and the third frame data based on values of pixels included in the second frame data and the third frame data, respectively; and

wherein the second generation step outputs, as frame data of the predictive frame data corresponding to the third point in time,

the third frame data in a case where said difference is smaller than or equal to the threshold, and

the intermediate frame data in the case where said difference is larger than the threshold.

12. The processing method according to claim 11, further comprising:

capturing the object at the predetermined interval, and

detecting the change in the pixel value.

13. The processing method according to claim 11 or 12, further comprising:
generating the predictive frame data based on the first frame data and the motion of the object detected by using the event data corresponding to the time later than the time to which the first frame data corresponds.

14. The processing method according to any one of claims 11 to claim 13,
wherein the pixel values of the third data are average values between the respective pixel values of the first data and the second data.

15. The processing method according to any one of claims 11 to 14, wherein
the first data correspond to a part of the region of the object in the second frame data, and the second data correspond to a part of the region of the object in the third frame data.

**Patentansprüche**

1. Verarbeitungsvorrichtung (13) zum Ausgeben von prädiktiven Einzelbilddaten für ein Bewegtbild eines Objekts, das aus mehreren Einzelbildern besteht, die in einem vorbestimmten Intervall angeordnet sind, umfassend:

eine erste Erhalteeinrichtung (12), die konfiguriert ist, erste Einzelbilddaten zu erhalten, die Einzelbilddaten des Bewegtbilds des Objekts sind, die einem ersten Zeitpunkt (t) entsprechen;
eine zweite Erhalteeinrichtung (11), die konfiguriert ist, Ereignisdaten zu erhalten, die in einem Intervall erhalten werden können, das kürzer als das vorbestimmte Intervall ist, und ein Detektionsergebnis einer Änderung eines Pixelwerts des Objekts sind;
eine Detektionseinrichtung (131), die konfiguriert ist, eine Bewegung des Objekts in einem Intervall, das kürzer als das vorbestimmte Intervall ist, unter Verwendung der Ereignisdaten zu detektieren; und
eine Erzeugungseinrichtung (132), die konfiguriert ist, prädiktive Einzelbilddaten aus den ersten Einzelbilddaten und der Bewegung des Objekts zu erzeugen, wobei die prädiktiven Einzelbilddaten mehreren Zeitpunkten (t+4, t+8, t+12, t+16) entsprechen, die später als ein erster Zeitpunkt (t) sind, welchem die ersten Einzelbilddaten entsprechen; und
eine dritte Erhalteeinrichtung (12), die konfiguriert ist, zweite Einzelbilddaten zu erhalten, die Einzelbilddaten des Bewegtbilds sind, die einem zweiten Zeitpunkt (t+16) entsprechen, welcher nach dem ersten Zeitpunkt (t) liegt;
**gekennzeichnet durch**
eine zweite Erzeugungseinrichtung (233), die konfiguriert ist, in einem Fall, in dem ein Unterschied zwischen den zweiten Einzelbilddaten und dritten Einzelbilddaten, welche in den prädiktiven Einzelbilddaten enthalten sind, welche durch die Erzeugungseinrichtung erzeugt werden und einem dritten Zeitpunkt (t+16) unter den mehreren Zeitpunkten entsprechen, welcher am nächsten zum zweiten Zeitpunkt (t+16) liegt, größer als ein Schwellenwert ist, Zwischeneinzelbilddaten unter Verwendung dritter Daten zu erzeugen, die einen Pixelwert zwischen einem Wert eines Pixels, welches in den ersten Daten enthalten ist, und einem Wert eines Pixels, welches in den zweiten Daten enthalten ist, in Bezug auf ein jeweiliges Pixel aufweisen, welches in den ersten Daten bzw. den zweiten Daten enthalten ist, wobei die ersten Daten mindestens einem Teil eines Gebiets des Objekts in den zweiten Einzelbilddaten entsprechen und die zweiten Daten mindestens einem Teil eines Gebiets des Objekts in den dritten Einzelbilddaten entsprechen;
wobei die zweite Erzeugungseinrichtung dafür ausgelegt ist, den Unterschied zwischen den zweiten Einzelbilddaten und den dritten Einzelbilddaten basierend auf Werten von Pixeln zu berechnen, welche in den zweiten Einzelbilddaten bzw. den dritten Einzelbilddaten enthalten sind; und
wobei die zweite Erzeugungseinrichtung ferner dafür ausgelegt ist, als Einzelbilddaten der prädiktiven Einzelbilddaten, welche dem dritten Zeitpunkt entsprechen, auszugeben:

die dritten Einzelbilddaten in einem Fall, in welchem der Unterschied kleiner als der oder gleich dem Schwellenwert ist, und die Zwischeneinzelbilddaten in dem Fall, in welchem der Unterschied größer als der Schwellenwert ist.

2.  Verarbeitungsvorrichtung nach Anspruch 1,

wobei die erste Erhalteeinrichtung das Objekt im vorbestimmten Intervall aufnimmt, und die zweite Erhalteeinrichtung die Änderung des Pixelwerts detektiert.

3.  Verarbeitungsvorrichtung nach Anspruch 1 oder 2, wobei die Erzeugungseinrichtung die prädiktiven Einzelbilddaten basierend auf den ersten Einzelbilddaten und der Bewegung des Objekts erzeugt, welche unter Verwendung der Ereignisdaten detektiert wurde, welche der Zeit entsprechen, die später als die Zeit ist, welcher die ersten Einzelbilddaten entsprechen.

4.  Verarbeitungsvorrichtung nach einem der Ansprüche 1 bis 3, wobei die Pixelwerte der dritten Daten Mittelwerte zwischen den jeweiligen Pixelwerten der ersten Daten und der zweiten Daten sind.

5.  Verarbeitungsvorrichtung nach einem der Ansprüche 1 bis 4, wobei
die ersten Daten einem Teil des Gebiets des Objekts in den zweiten Einzelbilddaten entsprechen und die zweiten Daten einem Teil des Gebiets des Objekts in den dritten Einzelbilddaten entsprechen.

6.  Verarbeitungsvorrichtung nach einem der Ansprüche 1 bis 5, wobei der zweite Zeitpunkt und der dritte Zeitpunkt gleich sind.

7.  Verarbeitungsvorrichtung nach einem der Ansprüche 1 bis 6, wobei die zweite Erzeugungseinrichtung konfiguriert ist, das Berechnen und das Erzeugen mit einer Häufigkeit von einmal alle mehreren Einzelbilder unter den mehreren Einzelbildern durchzuführen.

8.  Verarbeitungsvorrichtung nach einem der Ansprüche 1 bis 7, wobei die zweite Erzeugungseinrichtung dafür ausgelegt ist, einen Unterschied zwischen einem in den zweiten Einzelbilddaten enthaltenen Wert und einem in den dritten Einzelbilddaten enthaltenen Wert in Bezug auf ein jeweiliges Pixel zu berechnen, welches in den zweiten Einzelbilddaten bzw. den dritten Einzelbilddaten enthalten ist, und einen integrierten Wert der für alle Pixel berechneten Unterschiede als den Unterschied zwischen den zweiten Einzelbilddaten und den dritten Einzelbilddaten zu berechnen.

9.  Vorrichtung (9191), umfassend die Verarbeitungsvorrichtung nach einem der Ansprüche 1 bis 8, und ferner umfassend mindestens eines von:

einer optischen Vorrichtung (940), welche der Verarbeitungsvorrichtung entspricht;
einer Steuervorrichtung (950), welche konfiguriert ist, die Verarbeitungsvorrichtung zu steuern;
einer Signalverarbeitungsvorrichtung (960), welche konfiguriert ist, ein von der Verarbeitungsvorrichtung ausgegebenes Signal zu verarbeiten;
einer Anzeigevorrichtung (970), welche konfiguriert ist, von der Verarbeitungsvorrichtung erhaltene Information anzuzeigen;
einer Speichervorrichtung (980), welche konfiguriert ist, von der Verarbeitungsvorrichtung erhaltene Information zu speichern; und
einer mechanischen Vorrichtung (990), welche konfiguriert ist, basierend auf von der Verarbeitungsvorrichtung erhaltener Information zu arbeiten.

10. System, umfassend:

eine Aufnahmevorrichtung (31); und
eine Anzeigevorrichtung (32),

wobei die Aufnahmevorrichtung enthält:

eine erste Erhalteeinrichtung (312), welche konfiguriert ist, Einzelbilddaten zu erhalten, die Einzelbilddaten eines Bildes eines Objekts sind, indem das Objekt in einem vorbestimmten Intervall aufgenommen wird; eine zweite Erhalteeinrichtung (311), welche konfiguriert ist, Ereignisdaten zu erhalten, die in einem Intervall erhalten werden können, das kürzer als das vorbestimmte Intervall ist, und ein Detektionsergebnis einer Änderung eines Pixelwerts des Objekts sind, indem die Änderung des Pixelwerts des Objekts detektiert wird; eine Detektionseinrichtung, welche konfiguriert ist, eine Bewegung des Objekts in einem Intervall, das kürzer als das vorbestimmte Intervall ist, unter Verwendung der Ereignisdaten zu detektieren; und eine Übertragungseinrichtung (313), welche konfiguriert ist, die ersten Einzelbilddaten und Bewegungsinformation bezüglich der Bewegung des Objekts nach außerhalb der Bildaufnahmevorrichtung zu übertragen, und

die Anzeigevorrichtung enthält:

eine Empfangseinrichtung (321), welche konfiguriert ist, die Einzelbilddaten und die Bewegungsinformation von außerhalb der Anzeigevorrichtung zu empfangen; die Verarbeitungsvorrichtung (322) nach einem der Ansprüche 1 bis 8, wobei die erste Erhalteeinrichtung der Verarbeitungsvorrichtung dafür ausgelegt ist, die ersten Einzelbilddaten aus den durch die Empfangseinrichtung empfangenen Einzelbilddaten zu erhalten, die zweite Erhalteeinrichtung der Verarbeitungsvorrichtung dafür ausgelegt ist, die durch die Empfangseinrichtung empfangenen Ereignisdaten zu erhalten, und die dritte Erhalteeinrichtung der Verarbeitungsvorrichtung dafür ausgelegt ist, die zweiten Einzelbilddaten aus den durch die Empfangseinrichtung empfangenen Einzelbilddaten zu erhalten; und eine Anzeigeeinrichtung (323), welche konfiguriert ist, ein Bild basierend auf den durch die Verarbeitungsvorrichtung ausgegebenen Einzelbilddaten anzuzeigen.

11. Verarbeitungsverfahren zum Ausgeben von prädiktiven Einzelbilddaten für ein Bewegtbild eines Objekts, das aus mehreren Einzelbildern besteht, die in einem vorbestimmten Intervall angeordnet sind, umfassend:

Erhalten von ersten Einzelbilddaten, die Einzelbilddaten des Bewegtbilds des Objekts sind, die einem ersten Zeitpunkt entsprechen; Erhalten von Ereignisdaten, die in einem Intervall erhalten werden können, das kürzer als das vorbestimmte Intervall ist, und ein Detektionsergebnis einer Änderung eines Pixelwerts des Objekts sind; Detektieren einer Bewegung des Objekts in einem Intervall, das kürzer als das vorbestimmte Intervall ist, unter Verwendung der Ereignisdaten; und einen Erzeugungsschritt zum Erzeugen von prädiktiven Einzelbilddaten aus den ersten Einzelbilddaten und der Bewegung des Objekts, wobei die prädiktiven Einzelbilddaten mehreren Zeitpunkten entsprechen, die später als ein erster Zeitpunkt sind, welchem die ersten Einzelbilddaten entsprechen; und Erhalten von zweiten Einzelbilddaten, die Einzelbilddaten des Bewegtbilds sind, die einem zweiten Zeitpunkt entsprechen, welcher nach dem ersten Zeitpunkt liegt; **gekennzeichnet durch** einen zweiten Erzeugungsschritt zum Erzeugen, in einem Fall, in dem ein Unterschied zwischen den zweiten Einzelbilddaten und dritten Einzelbilddaten, welche in den prädiktiven Einzelbilddaten enthalten sind, welche durch den Erzeugungsschritt erzeugt werden und einem dritten Zeitpunkt unter den mehreren Zeitpunkten entsprechen, welcher am nächsten zum zweiten Zeitpunkt liegt, größer als ein Schwellenwert ist, von Zwischeneinzelbilddaten unter Verwendung dritter Daten, die einen Pixelwert zwischen einem Wert eines Pixels, welches in den ersten Daten enthalten ist, und einem Wert eines Pixels, welches in den zweiten Daten enthalten ist, in Bezug auf ein jeweiliges Pixel aufweisen, welches in den ersten Daten bzw. den zweiten Daten enthalten ist, wobei die ersten Daten mindestens einem Teil eines Gebiets des Objekts in den zweiten Einzelbilddaten entsprechen und die zweiten Daten mindestens einem Teil eines Gebiets des Objekts in den dritten Einzelbilddaten entsprechen; wobei die zweite Erzeugungseinrichtung dafür ausgelegt ist, den Unterschied zwischen den zweiten Einzelbilddaten und den dritten Einzelbilddaten basierend auf Werten von Pixeln zu berechnen, welche in den zweiten Einzelbilddaten bzw. den dritten Einzelbilddaten enthalten sind; und wobei der zweite Erzeugungsschritt als Einzelbilddaten der prädiktiven Einzelbilddaten, welche dem dritten Zeitpunkt entsprechen, ausgibt:

die dritten Einzelbilddaten in einem Fall, in welchem der Unterschied kleiner als der oder gleich dem Schwellenwert ist, und die Zwischeneinzelbilddaten in dem Fall, in welchem der Unterschied größer als der Schwellenwert ist.

12. Verarbeitungsverfahren nach Anspruch 11, ferner umfassend:

Aufnehmen des Objekts im vorbestimmten Intervall, und
Detektieren der Änderung des Pixelwerts.

13. Verarbeitungsverfahren nach Anspruch 11 oder 12, ferner umfassend:
Erzeugen der prädiktiven Einzelbilddaten basierend auf den ersten Einzelbilddaten und der Bewegung des Objekts, welche unter Verwendung der Ereignisdaten detektiert wurde, welche der Zeit entsprechen, die später als die Zeit ist, welcher die ersten Einzelbilddaten entsprechen.

14. Verarbeitungsverfahren nach einem der Ansprüche 11 bis 13,
wobei die Pixelwerte der dritten Daten Mittelwerte zwischen den jeweiligen Pixelwerten der ersten Daten und der zweiten Daten sind.

15. Verarbeitungsverfahren nach einem der Ansprüche 11 bis 14, wobei
die ersten Daten einem Teil des Gebiets des Objekts in den zweiten Einzelbilddaten entsprechen und die zweiten Daten einem Teil des Gebiets des Objekts in den dritten Einzelbilddaten entsprechen.

## Revendications

1. Dispositif de traitement (13) pour la sortie de données de trame prédictives pour une image animée d'un objet qui est constituée d'une pluralité de trames qui sont agencées à un intervalle prédéterminé, comprenant :

un premier moyen d'obtention (12) configuré pour obtenir de premières données de trame qui sont des données de trame de l'image animée de l'objet qui correspondent à un premier point temporel (t) ;
un deuxième moyen d'obtention (11) configuré pour obtenir des données d'événement qui peuvent être obtenues à un intervalle plus court que l'intervalle prédéterminé et qui sont un résultat de détection d'un changement d'une valeur de pixel de l'objet ;
un moyen de détection (131) configuré pour détecter un mouvement de l'objet à un intervalle plus court que l'intervalle prédéterminé en utilisant les données d'événement ; et
un moyen de génération (132) configuré pour générer des données de trame prédictives à partir des premières données de trame et du mouvement de l'objet, les données de trame prédictives correspondant à une pluralité de points temporels (t+4, t+8, t+12, t+16) qui sont postérieurs à un premier point temporel (t) auquel les premières données de trame correspondent ; et
un troisième moyen d'obtention (12) configuré pour obtenir de deuxièmes données de trame qui sont des données de trame de l'image animée qui correspondent à un deuxième point temporel (t+16) qui est postérieur au premier point temporel (t) ;
**caractérisé par**
un deuxième moyen de génération (233) configuré pour générer, dans un cas où une différence entre les deuxièmes données de trame et les troisièmes données de trame incluses dans les données de trame prédictives générées par le moyen de génération qui correspondent à un troisième point temporel (t+16) parmi la pluralité de points temporels qui est le plus proche du deuxième point temporel (t+16) est supérieure à un seuil, des données de trame intermédiaires en utilisant de troisièmes données qui ont une valeur de pixel entre une valeur d'un pixel inclus dans les premières données et une valeur d'un pixel inclus dans les deuxièmes données par rapport à chaque pixel inclus dans les premières données et les deuxièmes données, respectivement, les premières données correspondant à au moins une partie d'une région de l'objet dans les deuxièmes données de trame, et les deuxièmes données correspondant à au moins une partie d'une région de l'objet dans les troisièmes données de trame ;
dans lequel le deuxième moyen de génération est adapté pour calculer ladite différence entre les deuxièmes données de trame et les troisièmes données de trame sur la base de valeurs de pixels inclus dans les deuxièmes données de trame et les troisièmes données de trame, respectivement ; et
dans lequel le deuxième moyen de génération est en outre adapté pour délivrer, en tant que données de trame, des données de trame prédictives correspondant au troisième point temporel,
les troisièmes données de trame dans un cas où ladite différence est inférieure ou égale au seuil, et
les données de trame intermédiaires dans le cas où ladite différence est supérieure au seuil.

2. Dispositif de traitement selon la revendication 1, dans lequel le premier moyen d'obtention capture l'objet à l'intervalle prédéterminé, et le deuxième moyen d'obtention détecte le changement de la valeur de pixel.

3. Dispositif de traitement selon la revendication 1 ou 2, dans lequel le moyen de génération génère les données de trame prédictives sur la base des premières données de trame et du mouvement de l'objet détecté en utilisant les données d'événement correspondant au moment postérieur au moment auquel les premières données de trame correspondent.

4. Dispositif de traitement selon l'une quelconque des revendications 1 à 3, dans lequel les valeurs de pixels des troisièmes données sont des valeurs moyennes entre les valeurs de pixels respectives des premières données et des deuxièmes données.

5. Dispositif de traitement selon l'une quelconque des revendications 1 à 4, dans lequel les premières données correspondent à une partie de la région de l'objet dans les deuxièmes données de trame, et les deuxièmes données correspondent à une partie de la région de l'objet dans les troisièmes données de trame.

6. Dispositif de traitement selon l'une quelconque des revendications 1 à 5, dans lequel le deuxième point temporel et le troisième point temporel sont identiques.

7. Dispositif de traitement selon l'une quelconque des revendications 1 à 6, dans lequel le deuxième moyen de génération est configuré pour réaliser le calcul et la génération à une fréquence d'une fois toutes les plusieurs trames parmi la pluralité de trames.

8. Dispositif de traitement selon l'une quelconque des revendications 1 à 7, dans lequel le deuxième moyen de génération est adapté pour calculer une différence entre une valeur incluse dans les deuxièmes données de trame et une valeur incluse dans les troisièmes données de trame par rapport à chaque pixel inclus dans les deuxièmes données de trame et les troisièmes données de trame, respectivement, et pour calculer une valeur intégrée des différences calculées pour tous les pixels comme la différence entre les deuxièmes données de trame et les troisièmes données de trame.

9. Appareil (9191) comprenant le dispositif de traitement selon l'une quelconque des revendications 1 à 8, et comprenant en outre au moins l'un parmi :

un dispositif optique (940) correspondant au dispositif de traitement ; un dispositif de commande (950) configuré pour commander le dispositif de traitement ; un dispositif de traitement de signal (960) configuré pour traiter un signal délivré par le dispositif de traitement ; un dispositif d'affichage (970) configuré pour afficher des informations obtenues par le dispositif de traitement ; un dispositif de stockage (980) configuré pour stocker des informations obtenues par le dispositif de traitement ; et un dispositif mécanique (990) configuré pour fonctionner sur la base d'informations obtenues par le dispositif de traitement.

10. Système comprenant :

un dispositif de capture (31) ; et un dispositif d'affichage (32), dans lequel le dispositif de capture comporte :

un premier moyen d'obtention (312) configuré pour obtenir des données de trame qui sont des données de trame d'une image d'un objet en capturant l'objet à un intervalle prédéterminé ; un deuxième moyen d'obtention (311) configuré pour obtenir des données d'événement qui peuvent être obtenues à un intervalle plus court que l'intervalle prédéterminé et sont un résultat de détection d'un changement d'une valeur de pixel de l'objet en détectant le changement de la valeur de pixel de l'objet ; un moyen de détection configuré pour détecter un mouvement de l'objet à un intervalle plus court que l'intervalle prédéterminé en utilisant les données d'événement ; et un moyen de transmission (313) configuré pour transmettre les premières données de trame et les informations de mouvement concernant le mouvement de l'objet à l'extérieur du dispositif de capture d'image, et le dispositif d'affichage comporte :

un moyen de réception (321) configuré pour recevoir les données de trame et les informations de mouvement de l'extérieur du dispositif d'affichage ; le dispositif de traitement (322) selon l'une quelconque des revendications 1 à 8, dans lequel le premier moyen d'obtention du dispositif de traitement est adapté pour obtenir les premières données de trame à partir des données de trame reçues par le moyen de réception, le deuxième moyen d'obtention du dispositif de traitement est adapté pour obtenir les données d'événement reçues par le moyen de réception, et le troisième moyen d'obtention du dispositif de traitement est adapté pour obtenir les deuxièmes données de trame à partir des données de trame reçues par le moyen de réception ; et

un moyen d'affichage (323) configuré pour afficher une image sur la base des données de trame délivrées par le dispositif de traitement.

11. Procédé de traitement pour la sortie de données de trame prédictives pour une image animée d'un objet qui est constituée d'une pluralité de trames qui sont agencées à un intervalle prédéterminé, comprenant :

l'obtention de premières données de trame qui sont des données de trame de l'image animée de l'objet qui correspondent à un premier point temporel ;

l'obtention de données d'événement qui peuvent être obtenues à un intervalle plus court que l'intervalle prédéterminé et qui sont un résultat de détection d'un changement d'une valeur de pixel de l'objet ;

la détection du mouvement de l'objet à un intervalle plus court que l'intervalle prédéterminé en utilisant les données d'événement ; et

une étape de génération de données de trame prédictives à partir des premières données de trame et du mouvement de l'objet, les données de trame prédictives correspondant à une pluralité de points temporels qui sont postérieurs à un premier point temporel auquel les premières données de trame correspondent ; et

l'obtention de deuxièmes données de trame qui sont des données de trame de l'image animée qui correspondent à un deuxième point temporel qui est postérieur au premier point temporel ;
**caractérisé par**
une deuxième étape de génération consistant à générer, dans un cas où une différence entre les deuxièmes données de trame et les troisièmes données de trame incluses dans les données de trame prédictives générées par l'étape de génération qui correspondent à un troisième point temporel parmi la pluralité de points temporels qui est le plus proche du deuxième point temporel est supérieure à un seuil, des données de trame intermédiaires en utilisant des troisièmes données qui ont une valeur de pixel entre une valeur d'un pixel inclus dans les premières données et une valeur d'un pixel inclus dans les deuxièmes données par rapport à chaque pixel inclus dans les premières données et les deuxièmes données, respectivement, les premières données correspondant à au moins une partie d'une région de l'objet dans les deuxièmes données de trame, et les deuxièmes données correspondant à au moins une partie d'une région de l'objet dans les troisièmes données de trame ;
dans lequel le deuxième moyen de génération est adapté pour calculer ladite différence entre les deuxièmes données de trame et les troisièmes données de trame sur la base de valeurs de pixels inclus dans les deuxièmes données de trame et les troisièmes données de trame, respectivement ; et
dans lequel la deuxième étape de génération délivre, en tant que données de trame, des données de trame prédictives correspondant au troisième point temporel,
les troisièmes données de trame dans un cas où ladite différence est inférieure ou égale au seuil, et
les données de trame intermédiaires dans le cas où ladite différence est supérieure au seuil.

12. Procédé de traitement selon la revendication 11, comprenant en outre :

la capture de l'objet à l'intervalle prédéterminé, et
la détection du changement de la valeur de pixel.

13. Procédé de traitement selon la revendication 11 ou 12, comprenant en outre :
la génération des données de trame prédictives sur la base des premières données de trame et du mouvement de l'objet détecté en utilisant les données d'événement correspondant au moment ultérieur au moment auquel les premières données de trame correspondent.

14. Procédé de traitement selon l'une quelconque des revendications 11 à 13,
dans lequel les valeurs de pixels des troisièmes données sont des valeurs moyennes entre les valeurs de pixels respectives des premières données et des deuxièmes données.

15. Procédé de traitement selon l'une quelconque des revendications 11 à 14, dans lequel
les premières données correspondent à une partie de la région de l'objet dans les deuxièmes données de trame, et les deuxièmes données correspondent à une partie de la région de l'objet dans les troisièmes données de trame.

*FIG. 1*

*FIG. 2*

*FIG. 3*

*FIG. 4*

*FIG. 5*

FRAME DATA
(60fps)

TIME t          TIME t+16

EVENT DATA

TIME ~ (t+3)   TIME ~ (t+7)   TIME ~ (t+11)   TIME ~ (t+15)   TIME ~ (t+19)

MOTION INFORMATION
(240fps)

PREDICTIVE FRAME DATA
(240fps)

TIME t+4    TIME t+8    TIME t+12    TIME t+16    TIME t+20

EVENT DATA

FRAME DATA          NONSYNCHRONIC

EP 4 443 387 B1

*FIG. 6*

FIG. 7

FRAME DATA
(60fps)

TIME t

TIME t+16

COMPARE

EVENT DATA
TIME~(t+3)    TIME~(t+7)    TIME~(t+11)    TIME~(t+15)    TIME~(t+19)

MOTION INFORMATION
(240fps)

PREDICTIVE FRAME DATA
(240fps)

TIME t+4    TIME t+8    TIME t+12    TIME t+16    TIME t+20

EVENT DATA

FRAME DATA

NONSYNCHRONIC

EP 4 443 387 B1

*FIG. 8*

EP 4 443 387 B1

FIG. 9

9191

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014036357 A
- US 20180098082 A1

**Non-patent literature cited in the description**

- **H. WEIHUA et al.** *arxiv.org, arXiv:2203.13859v1*, 2022
- **W. SONG et al.** *Lecture Notes in Computer Science*, 2022, 267-283
- **Y. ZHIYANG et al.** *2021 IEEE/CVF International Conference on Computer Vision*, 2021, 14569-14578